# EUROPÄISCHE PATENTSCHRIFT

(11) **EP 1 217 464 B1**
(45) Veröffentlichungstag und Bekanntmachung des Hinweises auf die Patenterteilung: **16.04.2008**
(21) Anmeldenummer: 01128010.4
(22) Anmeldetag: 24.11.2001
(51) Int. Cl.: G03G 15/20

(54) **Fixiervorrichtung zum Fixieren von Tonermaterial**
Fixing device for fixing toner
Dispositif de fixage pour fixer du toner

(30) Priorität: 22.12.2000 DE 10064561
(43) Veröffentlichungstag der Anmeldung: 26.06.2002
(73) Patentinhaber: Eastman Kodak Company, Rochester, New York 14650 (US)
(72) Erfinder: Morgenweck, Frank-Michael, 24111 Kiel (DE); Rohde, Domingo, 24111 Kiel (DE)
(74) Vertreter: Weber, Etienne Nicolas

(56) Entgegenhaltungen:
- EP-A- 0 992 864
- DE-A1- 3 207 985
- NL-A- 7 500 941
- US-A- 4 019 054
- US-A- 4 939 536
- PATENT ABSTRACTS OF JAPAN Bd. 008, Nr. 075 (P-266), 7. April 1984 (1984-04-07) & JP 58 220164 A (CANON KK), 21. Dezember 1983 (1983-12-21)

## Beschreibung

Die Erfindung betrifft eine Fixiervorrichtung nach Anspruch 1 sowie ein Verfahren zum Fixieren von Tonermaterial nach Anspruch 13.

Beim elektrostatischen Druck wird ein latentes Bild an der Oberfläche eines mit einem organischen Fotoleitermaterial beschichteten Zylinders (Fotoleitertrommel) erzeugt. An das latente Bild haftet mittels einer Entwicklungsstation aufgebrachtes Tonermaterial an. Das entwickelte latente Bild wird in einem weiteren Schritt auf eine an der Fotoleitertrommel entlang geführten Bedruckstoffoberfläche übertragen. Eine andere Variante überträgt das entwickelte latente Bild erst an einen Zwischenträger und von diesem auf die Bedruckstoffoberfläche. Hierdurch wird das entwickelte latente Bild auf der Bedruckstoffoberfläche abgebildet.

Das entwickelte Bild wird mittels eines Fixiervorganges auf der Bedruckstoffoberfläche fixiert. Übliche Verfahren sind dabei Heisswalzenfixierung, Blitzlampenfixierung und Fixierung mittels einer Wärmestrahlungsquelle.

Daher wurden verschiedene Lösungsvorschläge von Fixiereinrichtungen zum Trocknen und Fixieren des Tonermaterials auf der Bedruckstoffoberfläche bereitgestellt.

Die Europäische Patentanmeldung EP 0 992 864 offenbart die Fixierung eines Farbauftrags auf einen blattartigen und/oder endlosen Träger, insbesondere von Tonerpulver auf Papier, wobei der Farbauftrag erwärmt wird, um insbesondere eine Aufschmelzung des Toners und eine dauerhafte Verbindung mit dem Träger zu erzielen. Hierbei wird der Farbauftrag mit Infrarotstrahlung, insbesondere einer Infrarotlampe, bei Emissionstemperaturen von 2500 K oder höher bestrahlt, so dass der Farbauftrag durch Absorption zumindest eines Teiles der Infrarotstrahlung erwärmt und fixiert wird.

Bei unerwärmtem Bedruckstoff besteht die Problematik der Blasenbildung im Tonermaterial. Daher wurden bisher Einrichtungen bereitgestellt, die den Bedruckstoff vorwärmen, d.h. der Bedruckstoff wird vor dem Fixiervorgang erwärmt.

Nachteilig hierbei ist zum einen der Platzbedarf für einen zusätzlichen Vorwärmer und zum anderen der Energieverlust durch den Transport vom zusätzlichen Vorwärmer zur Bestrahlungseinrichtung. Ferner ist nachteilig, dass die Fixierung des Tonermaterials bei ungeeigneter Tonermaterialviskosität in Abhängigkeit von der Temperatur nicht vollständig und ausreichend erfolgt.

Eine Aufgabe der Erfindung ist daher, eine Fixiervorrichtung und ein Verfahren für ein effizienteres Fixieren von Tonermaterial unabhängig von der Tonerdichte des Tonermaterials bereitzustellen.

Erfindungsgemäß ist die Aufgabe mit dem Vorrichtungsanspruch 1 und dem Verfahrensanspruch 13 gelöst.

Die Erfindung offenbart eine Fixiervorrichtung zum Fixieren von Tonermaterial für eine elektrofotografische Druckmaschine, bei der das Tonermaterial von einer Bestrahlungseinrichtung bestrahlbar und fixierbar ist und Bedruckstoff als Träger des Tonermaterials im Wesentlichen während des Bestrahlens von einer Einrichtung erwärmbar ist. Da der Bedruckstoff während des Bestrahlens von einer Einrichtung erwärmbar ist, ist die Fixiervorrichtung kompakt, energie- und platzeinsparend. Mit der erfindungsgemäßen Fixiervorrichtung ist der vollständige Bereich an Tonerdichten von 10% bis 400% geeignet fixierbar. Die Tonerdichte bezeichnet hierbei die Dichte einer Tonerschicht auf dem Bedruckstoff, die bei einfarbigem Druck gewöhnlich von 10% bis 100% reicht. Eine Tonerdichte von 400% ergibt sich demnach beispielsweise aus vier verschiedenfarbigen Tonerschichten mit jeweils 100% Dichte jeder Tonerschicht.

Weitere Ausführungsformen der Erfindung sind in den Unteransprüchen aufgeführt.

Die Einrichtung enthält wenigstens einen Mikrowellenapplikator für Mikrowellenstrahlung, durch dessen Anwendung der Fixiervorgang als Teil des Druckvorgangs in besonders schneller und wirtschaftlicher Weise ermöglicht wird, und folglich der gesamte Druckvorgang beschleunigt wird. Die Energieausnutzung ist bei Anwendung eines Mikrowellenapplikators hoch, da die Mikrowellenenergie nahezu ausschließlich zur Erwärmung des Bedruckstoffs dient. Ferner bewirkt dieses Phänomen eine gute Steuerbarkeit des Erwärmvorgangs. Die Bestrahlungseinrichtung ist vom durch den Mikrowellenapplikator bereitgestellten Mikrowellenfeld mittels eines Gitters getrennt. Als besonders vorteilhaft für den Fixiervorgang hat sich herausgestellt, wenn das Tonermaterial während des Bestrahlungsvorgangs oberhalb und der Bedruckstoff unterhalb der Glasübergangstemperatur des Tonermaterials liegt, zum Beispiel mit einer Temperatur des Tonermaterials von 110° C und einer Temperatur des Bedruckstoffs von 60° C. Bei Vorliegen dieser Bedingung ist der Temperaturgradient niedrig und das Tonermaterial behält über einen verhältnismäßig langen Zeitraum die Temperatur oberhalb der Glasübergangstemperatur, dadurch werden vorteilhafte Wirkungen bei der Druckqualität erzielt.

Die Bestrahlung kann mit hoher Energiedichte mit Strahlung im Wesentlichen im ultravioletten Spektralbereich erfolgen. Ultraviolette Strahlung hat hierbei insbesondere den Vorteil, dass diese vom zu bestrahlenden Tonermaterial zu einem sehr hohen Anteil und unabhängig von der Farbe des Tonermaterials absorbiert wird, vom Bedruckstoff dagegen nahezu vollständig reflektiert wird. Daher ist die Energieausnutzung verglichen mit andersfrequenter Strahlung höher.

Die Einrichtung kann ferner eine Kühleinrichtung enthalten, mit welcher ein bestimmter Temperaturgradient zwischen dem Bedruckstoff und dem Tonermaterial zur schnellen und sicheren Fixierung herstellbar ist. Die Kühleinrichtung dient beim doppelseitigen Druck weiterhin dazu, ein Anschmelzen von Tonermaterial von einer Seite des Bedruckstoffs zu vermeiden, während das Tonermaterial auf der anderen Seite bestrahlt wird und der Bedruckstoff, wie beschrieben, erwärmt wird. Desweiteren wird durch die Kühleinrichtung die Stapelfähigkeit des Bedruckstoffs gewährleistet, da bei der Stapelung von erwärmtem Bedruckstoff nach dem Aufbringen des Tonermaterials der Bedruckstoff aneinander verkleben und das Tonermaterial verwischen kann.

Zur weiteren Energieausnutzung ist der Bestrahlungseinrichtung wenigstens ein Resonator zugeordnet, in dem sich ein Mikrowellenfeld ausbildet und der zu einer gleichmäßigen homogenen Verteilung der Mikrowellen innerhalb des Resonatorgehäuses und dadurch zu einer gleichrnäßigen homogenen Erwärmung des Bedruckstoffs führt.

Bei einer Weiterbildung lassen sich weitere Resonatoren derart entlang eines Transportweges des Bedruckstoffs anordnen, dass sich die Wellenmaxima der stehenden elektromagnetischen Felder der einzelnen Resonatoren im Wesentlichen entlang des Bedruckstoffs befinden. Die Wellenmaxima sind hierbei zueinander um den Abstand von λ / (2 * Anzahl von Resonatoren) verschoben. Der Bedruckstoff wird in den einzelnen Resonatoren derart bereichsweise erwärmt, dass nach Durchlaufen des Bedruckstoffs durch alle Resonatoren eine etwa gleichmäßige Erwärmung des Bedruckstoffs durchgeführt ist.

So wird der Bedruckstoff beispeilsweise bei zwei dür die Fixiervorrichtung verwendeten Resonatoren beim Durchlauf durch den ersten Resonator periodisch entsprechend der Wellenmaxima etwa zur Hälfte erwärmt, und beim Durchlauf durch einen zweiten Resonator wird die andere Hälfte des Bedruckstoffs erwärmt.

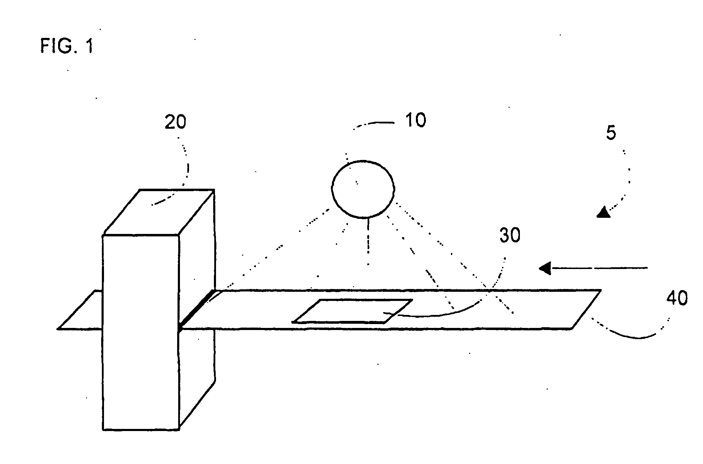

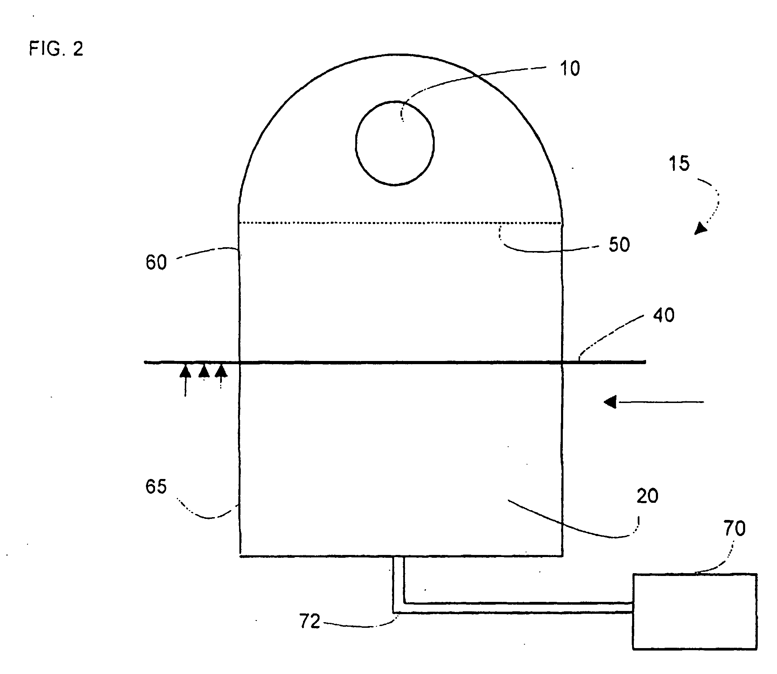

Im folgenden sind zur beispielhaften Darstellung der Erfindung zwei spezielle Ausführungsformen in Bezug auf die Figuren 1 und 2 dargestellt.

Es zeigen:
- Fig.1: eine schematische Darstellung eines Teils einer Fixiervorrichtung mit einem Mikrowellenapplikator und einer Bestrahlungseinrichtung gemäß einer Ausführungsform der Erfindung,
- Fig.2: eine andere erfindungsgemäße Ausführungsform einer Fixiervorrichtung mit einem Mikrowellenapplikator, einem diesem zugeordneten Resonator sowie einem zwischen dem Resonator angeordneten Transportband und einer Kühlung des Transportbandes.

Fig. 1 zeigt beispielhaft eine schematische Darstellung einer Ausführungsform der Erfindung, bei der ein endloses Transportband 40, hierbei ausschnittsweise dargestellt, einer elektrofotografischen Druckmaschine (nicht dargestellt) Bedruckstoff 30, bei dieser beispielhaften Darstellung ein einzelner Bogen Papier, der auf dem Transportband 40 liegt, in der durch den Richtungspfeil dargestellten Richtung transportiert. Auf den Bedruckstoff 30 ist in einem vorhergehenden Arbeitsvorgang über eine Fotoleitertrommel (nicht dargestellt) und eine weitere Zwischenwalze Tonermaterial aufgebracht worden, welches in diesem Fall die Farbwerte des letztlich zu erhaltenen Abbildes beim Mehrfarbdruck oder die Tonwerte beim Einfarbdruck bestimmt. Oberhalb des Transportbandes 40 ist ein Strahler als Teil einer Bestrahlungseinrichtung 10 angeordnet, die den Bedruckstoff 30 mit einer Strahlung im Wesentlichen im ultravioletten Spektralbereich bestrahlt. Der Strahler der Bestrahlungseinrichtung 10 ist hierbei seitlich dargestellt und besteht aus einer länglichen Röhre. Die ultraviolette Strahlungsintensität, der Abstand des Bedruckstoffs 30 zur Bestrahlungseinrichtung 10 und die Wellenlänge der ultravioletten Strahlung sind derart gewählt, dass das Tonermaterial für eine gewisse Bestrahlungszeit eine Temperatur oberhalb der Glasübergangstemperatur annimmt. Die Bestrahlung bewirkt das Schmelzen und das Ineinandergreifen des Tonermaterials mit dem Bedruckstoff 30, wobei das Tonermaterial vor dem Bestrahlen nur durch schwache Normalkräfte und elektrostatische Kräfte auf dem Bedruckstoff 30 festgehalten wird. Durch das Ineinandergreifen des Bedruckstoffs 30 mit dem Tonermaterial nach dessen Schmelzen entsteht eine feste, sichere und dauerhafte Verbindung, d.h. das Tonermaterial wird am Bedruckstoff 30 fixiert. Die Bestrahlung des Bedruckstoffs 30 mit ultravioletter Strahlung ist jedoch nicht bei allen verschiedenen Arten von Tonermaterial bei unterschiedlichen Druckarten geeignet anwendbar. Unerwünschterweise kann die Bestrahlung mit ultravioletter Strahlung bei einigen Arten von geschmolzenem Tonermaterial zur Beeinträchtigung der Bildqualität durch Bläschenbildung führen. Daher wird bei diesem Beispiel nach Fig.1 ein Mikrowellenapplikator 20 entlang des Tansportbandes 40 angeordnet. Der Mikrowellenapplikator 20 erzeugt ein elektrisches Wechselfeld, das an den bestimmten Anwendungsfall hinsichtlich Intensität und Wellenlänge angepasst ist. Dadurch werden die Moleküle der sich in diesem Feld befindlichen Stoffe in Bewegung versetzt, und durch Reibung der sich bewegenden Moleküle aneinander wird das Substrat oder der Bedruckstoff 30 erwärmt. Die Absorption der Mikrowellenstrahlung ist materialspezifisch und beispielsweise für Papier als Bedruckstoff 30 und das darin enthaltene Wasser um mindestens eine Größenordnung größer als für das Tonermaterial. Dadurch wird durch die Behandlung mit Mikrowellen überwiegend das Papier als Bedruckstoff 30 erwärmt. Zu beachten ist, dass eine Wechselwirkung zwischen der Erwärmung des Bedruckstoffs 30 durch den Mikrowellenapplikator 20 und der Erwärmung des Tonermaterials durch den Strahler der Bestrahlungseinrichtung 10 besteht, mit anderen Worten besteht, wie leicht verständlich ist, Wärmeleitung zwischen dem Bedruckstoff 30 und dem daran anliegenden Tonermaterial, so dass der Mikrowellenapplikator 20 ferner nicht nur den Bedruckstoff 30 sondern indirekt über den Bedruckstoff 30 auch das Tonermaterial erwärmt und andererseits die Bestrahlungseinrichtung 10 nicht nur das Tonermaterial sondern indirekt über das Tonermaterial auch den Bedruckstoff 30 erwärmt. Dieser Sachverhalt ist bei der Anpassung der vorstehend aufgeführten Größen zur Erzielung bestimmter Temperaturen des verwendeten Tonermaterials und des verwendeten Bedruckstoffs 30 zu beachten, ist jedoch eher nebensächlich, da die Mikrowellenstrahlung im Wesentlichen ausschließlich den Bedruckstoff 30 erwärmt und die ultraviolette Strahlung im Wesentlichen ausschließlich das Tonermaterial erwärmt. Die Erwärmung des Bedruckstoffs 30 bewirkt, dass das vorstehend beschriebene Phänomen der Bläschenbildung beim geschmolzenen Tonermaterial im Wesentlichen nicht mehr auftritt und somit eine Verbesserung des Druckbildes. Derart während des Bestrahlungsvorgangs erwärmt, sind alle gewöhnlichen Tonermaterialien mittels ultravioletter Bestrahlung auf Bedruckstoff 30 mit gutem Druckergebnis aufbringbar.

Fig. 2 zeigt eine andere Ausführungsform der Erfindung, bei der eine Bestrahlungseinrichtung 10 mit einem Strahler, der im Wesentlichen ultraviolettes Licht aussendet, oberhalb eines metallischen Gitters 50 und eines Transportbandes 40 einer Mehrfarb-Druckmaschine (nicht dargestellt) angeordnet ist. Hierbei ist vor dem Bestrahlen ein zu Fig. 1 ähnlicher Fall gegeben, bei dem das Tonermaterial noch unfixiert am Bedruckstoff 30 anliegt. Das Transportband 40 bewegt sich bei der Darstellung von der rechten zur linken Seite der Fig. 2 und erstreckt sich durch die Fixiervorrichtung 15. Unterhalb des metallischen Gitters 50 ist ein Mikrowellenresonator 60 angeordnet. Das Transportband 40 wird dabei durch den Mikrowellenresonator 60 durchgeführt und das Gitter bildet die obere Begrenzung des Mikrowellenresonators 60. Die Maschenweite des Gitters 50 ist dabei so zu wählen, dass die elektromagnetische Mikrowellenstrahlung der Mikrowellenquelle 70 innerhalb des Mikrowellenresonators 60 bleibt, mit denen die Mikrowellenquelle 70 über eine Zuleitung 72 verbunden ist. Der Mikrowellenapplikator 20, der etwa ein Magnetron oder Klystron als Mikrowellenquelle 70 und den Mikrowellenresonator 60 als Reaktor enthält, sendet gesteuert und an den jeweiligen Anwendungsfall angepaßt Mikrowellen aus, die an den Wänden des Mikrowellenresonators 60 als schwingungsfähiges Systeme reflektiert wird. Die Energieaussendung des Mikrowellenapplikators 20 wird an verschiedene Gegebenheiten angepaßt, wie die Abmessungen des Mikrowellenresonators 60 und die Eigenschaften des Bedruckstoffs 30 und des Transportbandes 40. Bei dieser beispielhaften Ausführung ist der Mikrowellenapplikator 20 derart eingestellt, dass stehende Mikrowellen innerhalb des Gehäuses des Mikrowellenresonators 60 erzeugt werden. Durch die Ausführung als im Wesentlichen geschlossenes Gehäuse und die bestimmte Ausrichtung der Wellenmaxima der stehenden Mikrowellen, bei welchen die Energie des elektrischen Feldes bekanntlich maximal ist, kann die angewendete Energie äußerst gut genutzt werden. Die Mikrowellen erwärmen hierbei im Wesentlichen direkt den Bedruckstoff 30, und die Bestrahlungseinrichtung 10, die im Wesentlichen im ultravioletten Spektrum aussendet, bestrahlt im Wesentlichen die Oberfläche des Bedruckstoff 30 und schmilzt das an diesem aufgebrachte Tonermaterial. Zusätzlich ist unterhalb der Bestrahlungseinrichtung 10 ein Gitter 50 angeordnet, das die Mikrowellenstrahlung von dieser trennt. Bei in etwa gleichzeitiger Anwendung der Erwärmung durch die Mikrowellenquelle 70 und der Bestrahlung durch die Bestrahlungseinrichtung 10 sind alle bekannten Tonermaterialien als Druckmittel einsetzbar. Bei dem Resonatorgehäuse 60 befindet sich eine Kühleinrichtung (nicht dargestellt), die einen kühlen Luftstrom erzeugt und den geringfügig durch die ultraviolette und im Wesentlichen durch die Mikrowellenbestrahlung erwärmten Bedruckstoff 30 nach dem Fixiervorgang abkühlt. Dieser Vorgang ist schematisch mittels der drei von unten nach oben in Richtung des Transportbandes 40 gerichteten Pfeile dargestellt. Der kühle Luftstrom kann gleichsam auch von oben auf das Transportband gerichtet sein. Die Abkühlung verhindert wirkungsvoll das Zusammenkleben des nach dem Fixiervorgang noch warmen Tonermaterials von verschiedenen Bogen des Bedruckstoffs 30, wenn diese übereinander in eine Ablage oder Stacker abgelegt werden. Ferner verhindert die Kühleinrichtung, dass bei beidseitigem Druck das Tonermaterial der bereits gedruckten Seite des Bedruckstoffs 30 schmilzt und sich die Fixierung am Bedruckstoff 30 löst, während oder nachdem das Tonermaterial auf der anderen Seite des Bedruckstoffs 30 bestrahlt und fixiert wird. Als weitere Lösungsmöglichkeit für vorstehenden Fall kann das Transportband 40 an dessen unterer Seite gekühlt sein. Dieser Seite zugewendet liegt die bereits gedruckte Seite des Bedruckstoffs 30 und wird direkt und während des Bestrahlungsvorgangs in der Weise gekühlt, dass das bereits fixierte Tonermaterial an dieser Seite des Bedruckstoffs 30 nicht schmilzt.

## Patentansprüche

1. Fixiervorrichtung (5, 15) zum Fixieren von Tonermaterial an einem Bedruckstoff(30) für eine elektrophotografische Druckmaschine mit einer Bestrahlungseinrichtung (10) zum Bestrahlen und thermisch Aufschmelzen des Tonermaterials, und eine Einrichtung zum Erwärmen des Bedruckstoffes (30) als Träger des Tonermaterials, **dadurch gekennzeichnet dass**
die Einrichtung zum erwärmen des Bedruckstoffes wenigstens einen Mikrowellenapplikator (20) enthält und dass das abgestrahlte elektromagnetische Spektrum des Bestrahlungseinrichtung (10) im Wesentlichen im ultravioletten Spektralbereich ist und daß die Vorrichtung weiterhin so eingerichtet ist, daß der Bedruckstoff während des Bestrahlens von der Einrichtung zum Erwärmen erwärmbar ist.

2. Fixiervorrichtung (5, 15) nach Anspruch 1, **dadurch gekennzeichnet, dass** eine Gehäuseseite des Mikrowellenapplikators (20) durch ein metallisches Gitter (50) gebildet ist.

3. Fixiervorrichtung (5, 15) nach Anspruch 1,
**dadurch gekennzeichnet, dass**
das Gitter (50) eine Maschenweite aufweist, die so gewählt ist, dass keine Mikrowellenstrahlung durch das Gitter (50) austritt.

4. Fixiervorrichtung (5, 15) nach einem der vorstehenden Ansprüche,
**dadurch gekennzeichnet, dass**
die Temperatur des Tonermaterials während des Fixiervorgangs oberhalb der Glasübergangstemperatur des Tonermaterials und die Temperatur des Bedruckstoffs (30) unterhalb der Glasübergangstemperatur des Tonermaterials einstellbar ist.

5. Fixiervorrichtung (5, 15) nach Anspruch 1,
**dadurch gekennzeichnet, dass**
die Einrichtung eine Kühleinrichtung enthält.

6. Fixiervorrichtung (5, 15) nach Anspruch 5,
**dadurch gekennzeichnet, dass**
die Kühleinrichtung mittels Luftkühlung betreibbar ist, insbesondere mit Ausbildung eines Luftkissens unterhalb des Bedruckstoffs (30).

7. Fixiervorrichtung (5, 15) nach Anspruch 6,
**dadurch gekennzeichnet, dass**
die Kühleinrichtung mittels Kontaktkühlung betreibbar ist,
insbesondere durch Wärmeübertragung zwischen einem Transportband (40) und dem Bedruckstoff (30).

8. Fixiervorrichtung (5, 15) nach einem der vorstehenden Ansprüche,
**dadurch gekennzeichnet, dass**
die Einrichtung unterhalb und auf der entgegengesetzten Seite des Bedruckstoffs (30) hinsichtlich der Bestrahlungseinrichtung (10) angeordnet ist.

9. Fixiervorrichtung (5, 15) nach einem der vorstehenden Ansprüche,
**dadurch gekennzeichnet, dass**
die Bestrahlungsintensität für verschiedene Anwendungsfälle und unterschiedliche Bedruckstoffarten anpaßbar ist.

10. Fixiervorrichtung (5, 15) nach einem der vorstehenden Ansprüche,
**dadurch gekennzeichnet, dass**
der Fixiervorrichtung (5, 15) wenigstens ein Mikrowellenresonator (60, 65) zugeordnet ist, in dem stehende elektromagnetische Wellen, insbesondere Mikrowellen, ausgebildet sind.

11. Fixiervorrichtung (5, 15) nach Anspruch 1,
**dadurch gekennzeichnet, dass**
der Fixiervorrichtung mehrere Mikrowellenresonatoren (60, 65) aufeinanderfolgend entlang eines Transportweges des Bedruckstoffs (30) zugeordnet sind..

12. Fixiervorrichtung (5, 15) nach Anspruch 1,
**dadurch gekennzeichnet, dass**
die Wellenmaxima des Mikrowellenfelds in den Mikrowellenresonatoren (60, 65) um bestimmte Längen zueinander verschoben sind.

13. Verfahren zum Fixieren von auf einem Bedruckstoff (30) aufgebrachtem Tonermaterial für eine elektrofotografische Druckmaschine,
mit den Verfahrensschritten
- Bestrahlen und Aufschmelzen des Tonermaterials mit ultravioletter Bestrahlung,
- Erwärmen des Bedruckstoffs (30) mit Mikrowellen während des Bestrahlens.

## Claims

1. Fusing device (5, 15) for fusing toner material on a printing material (30) for an electrophotographic printing machine, having an irradiation means (10) for irradiating and melt-depositing the toner material, and a device for heating the printing material (30), said material being the carrier of the toner material, **characterized in that**
the device for heating the printing material comprises at least one microwave applicator (20), and that the emitted electromagnetic spectrum of the irradiation means (10) is essentially within the ultraviolet range of the spectrum, and that said fusing device is further set up in such a manner that the printing material can be heated by the device used for heating.

2. Fusing device (5, 15) as in Claim 1,
**characterized in that**
one housing side of the microwave applicator (20) is formed by a metal screen (50).

3. Fusing device (5, 15) as in Claim 1,
**characterized in that**
the screen (50) has a mesh width that is selected in such a manner that no microwave radiation exits through the screen (50).

4. Fusing device (5, 15) as in one of the previous Claims,
**characterized in that**,
during the fusing process, the temperature of the toner material can be adjusted above the glass-transition temperature of the toner material and the temperature of the printing material (30) can be adjusted below the glass-transition temperature of the toner material.

5. Fusing device (5, 15) as in Claim 1,
**characterized in that**
said device comprises a cooling unit.

6. Fusing device (5, 15) as in Claim 5,
**characterized in that**
the cooling unit can be operated by air-cooling, in particular by creating an air cushion underneath the printing material (30).

7. Fusing device (5, 15) as in Claim 6,
**characterized in that**
the cooling unit can be operated by contact-cooling, in particular by heat transfer between a transport belt (40) and the printing material (30).

8. Fusing device (5, 15) as in one of the previous Claims,
**characterized in that**,
with respect to the irradiation means (10), the unit is arranged below and on the opposite side of the printing material (30).

9. Fusing device (5, 15) as in one of the previous Claims,
**characterized in that**
the irradiation intensity can be adapted to various applications and to different types of printing material.

10. Fusing device (5, 15) as in one of the previous Claims,
**characterized in that**
at least one microwave resonator (60, 65) is associated with the fusing device (5, 15), with stationary electromagnetic waves, in particular microwaves, being generated in said microwave resonator.

11. Fusing device (5, 15) as in Claim 1,
**characterized in that**
several microwave resonators (60, 65) are successively associated with said fusing device along a transport path of the printing material (30).

12. Fusing device (5, 15) as in Claim 1,
**characterized in that**
the wave maxima of the microwave field in the microwave resonator (60, 65) are shifted by specific lengths relative to each other.

13. Method for fusing a toner material that has been applied to a printing material (30) for an electrophotographic printing machine, said method comprising the following steps:
- irradiating and melt-depositing the toner material with the use of ultraviolet radiation,
- heating of the printing material (30) with microwaves during irradiation.

## Revendications

1. Dispositif fixateur (5, 15) utilisé pour fixer du matériau de toner sur un support d'impression (30) pour une imprimante électrophotographique comprenant une source de rayonnement (10) émettant des rayons pour fondre le matériau de toner sous l'effet de la chaleur, ainsi qu'un dispositif d'échauffement du support d'impression (30) utilisé comme support du matériau de toner, **caractérisé en ce que** le dispositif d'échauffement du support d'impression comprend au moins un applicateur à micro-ondes (20) et que le spectre électromagnétique émis par la source de rayonnement (10) couvre essentiellement la plage spectrale ultraviolette et **en ce que** le dispositif est en outre aménagé de sorte que le support d'impression puisse être échauffé pendant le rayonnement du dispositif d'échauffement.

2. Dispositif fixateur (5, 15) selon la revendication 1, **caractérisé en ce qu'**un côté du boîtier de l'applicateur à micro-ondes (20) est constitué d'une grille métallique (50).

3. Dispositif fixateur (5, 15) selon la revendication 1, **caractérisé en ce que** la grille (50) présente un maillage choisi de façon à empêcher tout passage du rayonnement de micro-ondes par la grille (50).

4. Dispositif fixateur (5, 15) selon l'une quelconque des revendications précédentes, **caractérisé en ce que** la température du matériau de toner peut être réglée, pendant le cycle de fixation, à une valeur supérieure à la température de transition vitreuse du matériau de toner et que la température du support d'impression (30) puisse être réglée à une valeur inférieure à la température de transition vitreuse du matériau de toner.

5. Dispositif fixateur (5, 15) selon la revendication 1, **caractérisé en ce que** le dispositif comprend un dispositif de refroidissement.

6. Dispositif fixateur (5, 15) selon la revendication 5, **caractérisé en ce que** le dispositif de refroidissement peut fonctionner avec de l'air de refroidissement, notamment par la production d'un coussin d'air au-dessous du support d'impression (30).

7. Dispositif fixateur (5, 15) selon la revendication 6, **caractérisé en ce que** le dispositif de refroidissement peut fonctionner par le principe de refroidissement par contact, notamment par la transmission de chaleur entre une bande de transport (40) et le support d'impression (30).

8. Dispositif fixateur (5, 15) selon l'une quelconque des revendications précédentes, **caractérisé en ce que** le dispositif est disposé au-dessous et sur le côté opposé du support d'impression (30) par rapport à la source de rayonnement (10).

9. Dispositif fixateur (5, 15) selon l'une quelconque des revendications précédentes, **caractérisé en ce que** l'intensité de rayonnement peut être adaptée en fonction des différents cas d'application et des différents types de support d'impression.

10. Dispositif fixateur (5, 15) selon l'une quelconque des revendications précédentes, **caractérisé en ce qu'**au moins un résonateur à micro-ondes (60, 65) est associé au dispositif fixateur (5, 15), ce résonateur produisant des ondes électromagnétiques, notamment des micro-ondes stationnaires.

11. Dispositif fixateur (5, 15) selon la revendication 1, **caractérisé en ce que** plusieurs résonateurs de micro-ondes (60, 65) sont associés au dispositif fixateur, ces résonateurs étant disposés le long d'un chemin de transport du support d'impression (30).

12. Dispositif fixateur (5, 15) selon la revendication 1, **caractérisé en ce que** les maxima d'ondes du champ à micro-ondes sont décalés les uns par rapport aux autres dans les résonateurs à micro-ondes (60, 65) par des longueurs prédéterminées.

13. Procédé de fixation d'un matériau de toner appliqué sur un support d'impression (30) pour une imprimante électrophotographique comprenant les étapes de procédé suivantes :
Application de rayons et fusion du matériau de toner par rayonnement ultraviolet,
Echauffement du support d'impression (30) par des micro-ondes pendant le rayonnement.
